# NEUE EUROPÄISCHE PATENTSCHRIFT

(11) **EP 0 892 901 B2**
(45) Veröffentlichungstag und Bekanntmachung des Hinweises auf die Entscheidung über den Einspruch: **05.02.2003**
(45) Hinweis auf die Patenterteilung: 05.01.2000
(21) Anmeldenummer: 97922853.3
(22) Anmeldetag: 18.04.1997
(51) Int. Cl.: F16K 51/00, F16K 27/02, F16L 23/16

(54) **SICHERHEITSFUNKTIONSELEMENT FÜR EINE LEITUNG**
SAFETY ELEMENT FOR A DUCT
ELEMENT DE SECURITE POUR UN CONDUIT

(30) Priorität: 19.04.1996 DE 19615472
(43) Veröffentlichungstag der Anmeldung: 27.01.1999
(73) Patentinhaber: Windschmitt, Hans, 60599 Frankfurt (DE); Kampfmann, Frank, 63811 Stockstadt (DE); Kolb, Hannelore, 35415 Pohlheim (DE)
(72) Erfinder: Windschmitt, Hans, 60599 Frankfurt (DE); Kampfmann, Frank, 63811 Stockstadt (DE); Kolb, Hannelore, 35415 Pohlheim (DE)
(74) Vertreter: Pöhner, Wilfried Anton, Dr.
(86) Internationale Anmeldenummer: DE9700785
(87) Internationale Veröffentlichungsnummer: WO97040304

(56) Entgegenhaltungen:
- DE-A- 3 138 355
- DE-U- 8 803 960
- GB-A- 2 158 558
- US-A- 3 573 863
- US-A- 5 228 472
- US-A- 5 597 009

## Beschreibung

Die Erfindung bezieht sich auf ein Sicherheitsfunktionselement zur Beeinflussung oder Kontrolle fluider Medien in einer Leitung, insbesondere einer doppelwandigen Sicherheitsleitung, deren Wände durch einen Hohlraum voneinander beabstandet sind, wobei das Element mit einem von Wandungen gebildeten Gehäuse versehen ist, wobei das Gehäuse allseitig von einer zweiten Wandung umgeben ist, die von der ersten Wandung durch einen Hohlraum beabstandet ist und wobei in Betrieb der Hohlraum gasdicht abgeschlossen ist. Ein gattungsgemäßes Sicherheitsfunktionselement ist aus der US-A-5 228 472 bekannt.

In Rohrleitungssystemen werden vielfach leicht entflammbare oder explosive Flüssigkeiten und Gase, wassergefährdende, gesundheits- oder umweltschädliche Produkte transportiert. Da ein unkontrollierter Austritt des geförderten Mediums erhebliche Schäden und Gefahren zur Folge hätte, ist zur Vermeidung die Verwendung doppelwandiger Sicherheitsleitungen bekannt, deren Wandungen durch einen Hohlraum voneinander beabstandet sind. Derartige Sicherheitsleitungen sind aus der US-PS 5,228,472 bekannt, bei denen bereits Absperrventile in die Leitung eingebaut sind. Auf diese Weise wird nicht nur unmittelbar der Schutz vor einem Austritt des Mediums verbessert sondern es ist auch möglich, den Hohlraum mit einem Meßgerät zur Kontrolle seines Inhaltes zu verbinden, beispielsweise einem Nachweisgerät für spezifische Gase oder einem Druckmeßgerät. Somit kann eine Austrittsmeldung und eine nachfolgende Abschaltung der Förderung durch die Leitung bereits dann erfolgen, wenn das Medium in den Hohlraum eintritt, so daß die Gefahr eines Ausfließens in die Umwelt vollständig unterbunden wird.

Leitungen sind in der Regel mit einer Vielzahl von Funktionselementen versehen. Beispiele sind Rückschlag- oder Absperrventile, Schieber, Pumpen oder Durchflußmesser, die jeweils über Flansche mit den Leitungsrohren, welche aus starrem oder flexiblem Material bestehen können, verbunden sind. Im Bereich der Funktionselemente sind keine geeigneten Maßnahmen zum Schutz vor einem Austritt des Mediums bekannt. Dies hat einerseits zur Folge, daß die Funktionselemente im Betrieb eine erhebliche Gefahrenquelle darstellen, so daß es dort im Vergleich zur Leitung überdurchschnittlich häufig zu Leckagen kommt. Andererseits bedeutet dies beim Bau einer Leitung einen erheblichen Mehraufwand, da es auch bei unterirdischer Verlegung notwendig ist, eine ständige, auch gesetzlich geforderte Zugänglichkeit der Funktionselemente zu gewährleisten. Im Stande der Technik erfolgt die Anbringung des Funktionselementes daher entweder in einem Schacht oder einer überirdischen Leitungsschleife, so daß erhebliche Mehrkosten die nachteilige Folge sind. Neben den Funktionselementen selbst stellen die Flansche, an denen sie beispielsweise durch Schrauben dichtend mit der angrenzenden Leitung verbunden sind, weitere Bereiche dar, in denen besonders häufig Undichtigkeiten auftreten.

Vor diesem Hintergrund hat sich die Erfindung die Entwicklung eines Sicherheitsfunktionselementes zur Aufgabe gestellt, das einen leicht zu kontrollierenden und verbesserten Schutz vor dem Austritt des Mediums bietet und daher keine unmittelbare Zugänglichkeit erfordert.

Diese Aufgabe wird erfindungsgemäß durch die kennzeichnenden Merkmale des 1. Anspruchs gelöst.

Das vorgeschlagene Sicherheitsfunktionselement ist von einem Gehäuse umgeben, das allseitig zwei Wandungen, vorzugsweise aus Stahl aufweist, welche durch einen Hohlraum voneinander beabstandet sind. Der Hohlraum ist gasdicht abgeschlossen und mit einem Meßgerät zur Kontrolle seines Inhaltes verbindbar oder ständig verbunden. Somit ist es möglich, einen Austritt des Mediums in den Hohlraum nachzuweisen und Maßnahmen, speziell eine Abschaltung der Leitung, zu ergreifen, bevor es zu einem Austritt aus dem Hohlraum in die Umwelt kommt. Um auch eine bevorstehenden Undichtigkeit im Bereich der Flansche nachweisen zu können, ist deren Dichtfläche mit einer die Leitungen umlaufenden Nut versehen, die z. B. eingefräst ist. Die Tiefe der Nut ist derart zu wählen, daß eine Dichtung der Flansche allenfalls teilweise in sie eindringt, so daß auf ihrer gesamten Länge ein durchgehender Kanal verbleibt. Über eine oder mehrere Bohrungen oder auf andere Weise hergestellte Öffnungen ist die Nut bodenseitig mit dem Hohlraum des Gehäuses verbunden. Dringt das in der Leitung befindliche Medium in die Dichtfläche ein, so daß die Gefahr seines Austretens unmittelbar bevorsteht, so gelangt es durch die Nut und die Bohrungen in den Hohlraum und läßt sich dort mit dem Meßgerät nachweisen. Auch in diesem Fall können folglich Sicherheitsmaßnahmen ergriffen werden.

Funktionselemente weisen ein in das fluide Medium eingreifendes Wirkteil auf, zum Beispiel den Teller eines Absperrventils. Zur Betätigung dient ein mechanisches Koppelelement, das eine Durchführung im Gehäuse durchfaßt. Beispielsweise wird ein Ventilteller über eine Spindel als Koppelelement bewegt, so daß er über ein Handrad oder einen auf dem Gehäuse angebrachten Motor verstellbar ist. Um einen Austritt des Mediums entlang der Durchführung zu vermeiden wird vorgeschlagen, das Wirkteil durch einen Faltenbalg, in dessen Inneres das Koppelelement endseitig eingreift, mit dem Gehäuse dichtend zu verbinden. Auf diese Weise wird das fluide Medium von der Durchführung abgeteilt, während der Faltenbalg aufgrund seiner Verformbarkeit die Bewegung des Wirkteils nicht behindert. Ein erheblich verbesserter Schutz vor einem Austritt des Mediums ist die vorteilhafte Folge.

Der Vorteil des erfindungsgemäßen Funktionselementes besteht in einem erheblich verbesserten Schutz vor dem Austritt des transportierten Mediums. Aufgrund der verbesserten Schutzwirkung erübrigt sich die Notwendigkeit einer unmittelbaren Zugänglichkeit des Elementes, da vor einem drohenden Austritt Sicherheitsmaßnahmen ergriffen werden können und genügend Zeit für eine Reparatur besteht. Unabhängig von der Überwachungsart erlaubt die vorgeschlagene Lösung bereits kleinste Leckagen detektieren zu können. Insbesondere entstehen somit erhebliche Kostenvorteile, da die Erstellung überirdischer Leitungsschleifen oder von Zugangsschächten entfällt. Ferner beeinträchtigen auch außenseitige Hüll- oder Isolationsschichten die Überwachung des Funktionselementes nicht.

Das erfindungsgemäße Funktionselement bietet sich insbesondere bei Absperrvorrichtungen, also Schiebern oder Ventilen, an, bei denen vergleichsweise häufig die Notwendigkeit eines Einbaus in unzugänglichen Bereichen besteht. Weiterhin ist die erfindungsgemäße Ausbildung auch bei einem Rückschlagventil von Vorteil, das gleichfalls häufig unzulänglich anzuordnen ist. Viele andere Funktionselemente hingegen, beispielsweise Schmutzfänger, Pumpen oder Durchflußmesser werden dagegen im allgemeinen gut zugänglich angeordnet, etwa in einer Pumpstation, so daß eine unmittelbare Überwachung möglich ist.

Bei Verwendung eines Faltenbalges ist es zweckmäßig, daß das zwischen ihm und dem Gehäuse befindliche Volumen mit einem Meßgerät zur Kontrolle seines Inhaltes verbindbar ist, so daß sich auch ein Versagen des Faltenbalges nachweisen läßt.

Weiter verbessern läßt sich der Schutz gegen einen Austritt des Mediums, wenn die Durchführung eines Koppelelementes durch eine oder mehrere Buchsen erfolgt, sogenannte Sicherheitsbuchsen, die dichtend am Koppelelement anliegen.

Für die Füllung des Hohlraumes zwischen den Gehäusewandungen bietet sich ein Druckgas, z. B. Druckluft, oder ein Vakuum an. In der Folge läßt sich eine Undichtigkeit bereits durch Änderung des Gesamtdruckes nachweisen, so daß als Meßvorrichtung ein einfaches Manometer ausreichend ist. Prinzipiell ist es von Vorteil, sowohl eine Undichtigkeit der inneren, dem Medium zugewandten als auch der äußeren, der Umgebung zugewandten Wandung nachweisen zu können, da in beiden Fällen eine erheblich vergrößerte Gefahr eines Austritts des Mediums besteht. Diese Anforderung ist bei Füllung mit Druckluft oder einem Vakuum erfüllt, da in beiden Fällen eine Druckänderung eintritt. Die Überwachung des Hohlraumes mit einem Vakuum ist jedoch nicht für brennbare, explosive oder wassergefährdende Stoffe zugelassen. Deshalb ist auch die Füllung des Hohlraumes mit einem Schutzgas, beispielsweise Stickstoff, denkbar. Befindet sich ein Schutzgas im Hohlraum, so ist eine spezifisch das in der Leitung befindliche Medium nachweisende Vorrichtung als Meßgerät von Vorteil, um bereits kleinste Lecks detektieren zu können.

Ist das erfindungsgemäße Funktionselement an eine doppelwandige Sicherheitsleitung angeflanscht, so stehen die Hohlräume von Sicherheitsleitung und Gehäuse zweckmäßig miteinander in Verbindung. Dazu wird die Nut über eine Öffnung im Flanschteil der Sicherheitsleitung mit deren Hohlraum verbunden. Eine Dichtung im Flansch ist dabei mit einer oder mehreren zur Leitungachse parallelen Öffnungen versehen oder besteht aus zwei konzentrischen Teilen, so daß die Verbindung zwischen Nut und Öffnung im Flanschteil des Rohres nicht unterbrochen wird.

Eine durchgehende Verbindung der Hohlräume von Rohrteilen über ein zwischen ihnen befindliches Funktionselement hinweg hat den Vorteil, daß sich erhebliche Rohrabschnitte mit einem einzigen Meßgerät überwachen lassen. Im Fall eines Lecknachweises besteht das Problem der Lokalisierung der schadhaften Stelle. Daher wird in einer Weiterbildung vorgeschlagen, daß die Bohrung zwischen Flansch und Hohlraum durch eine Sperrvorrichtung, beispielsweise eine Sperrschraube, verschließbar ist. Dabei ist es grundsätzlich ohne Bedeutung, ob es sich um die Bohrung zwischen dem Hohlraum der Sicherheitsleitung und dem Flansch oder der des Gehäuses und dem Flansch handelt. In beiden Fallen läßt sich die Leitung durch Schließen der Sperrvorrichtung abschnittsweise unterteilen, so daß die Lecksuche erheblich vereinfacht wird.

Zweckmäßig entspricht die Querschnittsfläche des Gehäuses des Sicherheitsfunktionselementes dem äußeren Querschnitt der Leitung, in die es eingesetzt ist, d.h. die Gestalten der äußeren Wandungen von Leitung und Gehäuse entsprechen einander. Auf diese Weise werden räumliche Probleme beim Einbau des Sicherheitsfunktionselementes vermieden, da keine Querschnittserweiterung gegenüber der Leitung erfolgt. Geringe Abweichungen des Durchmessers sind dabei denkbar, insbesondere eine geringfügige Erweiterung, um einen hinreichenden Öffnungsquerschnitt des Funktionselementes zur Vermeidung übermäßiger Strömungswiderstände zu ermöglichen.

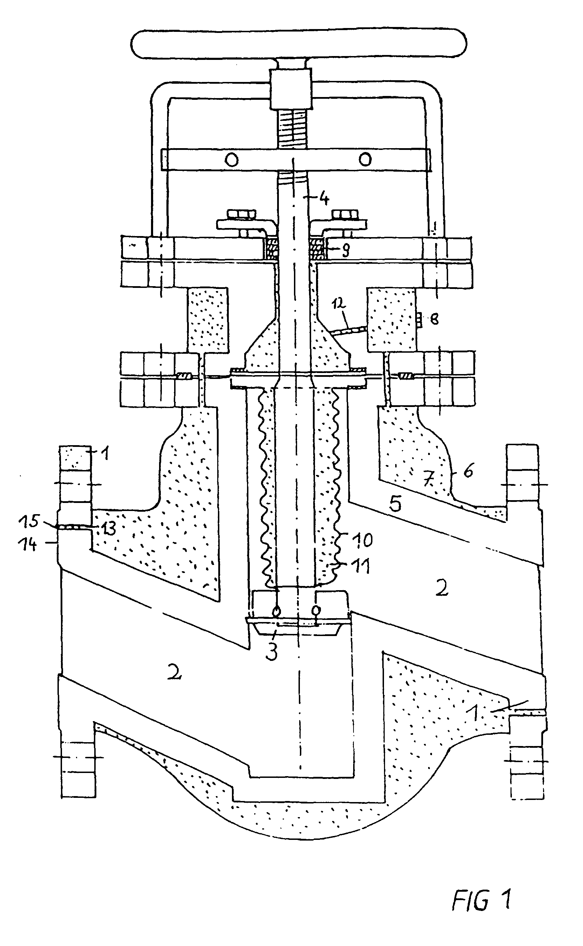

Weitere Einzelheiten, Merkmale und Vorteile der Erfindung lassen sich dem nachfolgenden Beschreibungsteil entnehmen, in dem anhand der Zeichnung ein Ausführungsbeispiel der Erfindung näher erläutert ist. Die Zeichnung zeigt in prinzipienhafter Darstellung
- Fig. 1:: Querschnitt durch ein erfindungsgemäßes Absperrventil,

Das Ventil in Figur 1 ist über zwei Flansche (1) an Rohre einer Leitung anschließbar, deren Verlauf sich somit entlang eines Kanals (2) fortsetzt, dessen Querschnitt mit dem Teller (3) des Ventils verschließ- bzw. veränderbar ist. Die Betätigung des Tellers (3) erfolgt über eine aus dem Gehäuse des Ventils herausgeführte Spindel (4), die über ein endseitig an ihr befestigtes Handrad bewegbar ist.

Zur Erhöhung der Sicherheit vor einem Austritt des Mediums aus dem Kanal (2) ist das Ventil von zwei Wandungen (5, 6) umgeben, die einen Hohlraum (7) einschließen. Weiterhin ist der Hohlraum (7) mit einem Anschluß (8) versehen, über den ein Meßgerät zur Prüfung seines Inhaltes, insbesondere ein Druckmeßgerät anschließbar ist. Wird nun die innere Wandung (5) des Ventils beschädigt, so tritt das im Kanal (2) strömende Medium nicht in die Umgebung sondern in den Hohlraum (7) aus. Die entstehende Druckänderung läßt sich mit dem am Anschluß (8) angebrachten Meßgerät nachweisen, so daß sich Sicherheitsmaßnahmen vornehmen lassen und ein Austausch des Ventils erfolgen kann, bevor ein Austritt durch die äußere Wandung (6) erfolgt. Ist der Hohlraum (7) mit einem anderen Medium als Luft oder mit einem vom äußeren Luftdruck abweichenden Druck gefüllt, so lassen sich mittels des Meßgerätes auch Leckagen in der äußeren Wandung (6) nachweisen.

Die Durchführung mechanischer Betätigungselemente, im Beispiel der Spindel (4) durch das Gehäuse des Ventils erfordert eine spezielle Sicherung. Die Durchführung erfolgt durch mehrere Buchsen (9), sogenannte Sicherheitsbuchsen, die dichtend an der Spindel (4) anliegen. Das untere Ende der Spindel (4) ist von einem deformierbaren Faltenbalg (10) umgeben, der dicht mit dem Teller (3) und der inneren Wandung (5) verbunden ist. Auf diese Weise entsteht zwischen Faltenbalg (10) und innerer Wandung (5) das Volumen (11) eines weiteren Hohlraums mit der Folge, daß das im Kanal (2) befindliche Medium nicht an die Durchführung der Spindel (4) gelangt. Auch das Volumen (11) läßt sich mittels der Bohrung (12) durch ein Meßgerät überwachen, um ein Versagen der Buchsen (9) oder des Faltenbalgs (10) nachweisen zu können.

Damit auch die Überwachung der Flansche (1) gewährleistet ist, sind sie in ihrem Inneren mit Bohrungen (13) versehen, die eine ihre Dichtfläche (14) umlaufende Nut (15) mit dem Hohlraum (7) verbindet. Im Fall einer schadhaften Abdichtung gelangt das austretende Medium in die Nut (15) und wird durch die Bohrungen (13) in den Hohlraum (7) geleitet, wo es über den Anschluß (8) dem Meßgerät nachweisbar ist. Entscheidend ist dabei, daß die Nut (15) etwa im Zentrum der Dichtfläche (14) angeordnet ist, so daß der Nachweis des Austritts bereits erfolgt, bevor die Dichtung vollständig durchdrungen ist und bevor ein Austritt in die Umgebung stattfinden konnte. Auf diese Weise ist auch im Bereich der Flansche (1) ein guter Austrittsschutz gegeben.

Im Ergebnis entsteht ein leicht überwachbares Sicherheitsfunktionselement, das den Schutz vor einem Medienaustritt erheblich verbessert und die Verlegung einer Leitung wesentlich vereinfacht, da sich die Anforderungen an die Zugänglichkeit des Elementes verringern. Die Verbesserung der Sicherheit in allen Industriebereichen, speziell in der chemischen Industrie, ist mit der Erfindung in ein Stadium getreten, das es erlaubt, Umweltschäden mit zuverlässiger Sicherheit zu vermeiden.

## Patentansprüche

1. Sicherheitsfunktionselement zur Beeinflussung oder Kontrolle fluider Medien in einer doppelwandigen Leitung, deren Wände durch einen Hohlraum voneinander beabstandet sind, wobei das Element mit einem von Wandungen (5) gebildeten Gehäuse versehen ist, wobei das Gehäuse allseitig von einer zweiten Wandung (6) umgeben ist, die von der ersten Wandung (5) durch einen Hohlraum (7) beabstandet ist und wobei in Betrieb der Hohlraum (7) gasdicht abgeschlossen ist, und das Funktionselement ein in das fluide Medium eingreifendes Wirkteil aufweist, das über ein mechanisches Koppelelement betätigbar ist, welches eine Durchführung im Gehäuse durchfaßt, **dadurch gekennzeichnet, daß**
- das Gehäuse Flansche (1) aufweist, durch die es dichtend mit der Leitung verbindbar ist,
- der Hohlraum mit einem Anschluß (8) versehen ist, über den ein Meßgerät zur Kontrolle seines Inhaltes verbindbar ist,
- der Hohlraum (7) durch eine oder mehrere Bohrungen (13) mit einer Nut (15) verbunden ist, die in die Dichtfläche (14) des Flansches (1) oder seine Dichtung (18) eingebracht ist und in Betrieb die Leitung umläuft, und
- das Wirkteil durch einen Faltenbalg (10), der das fluide Medium von der Durchführung abteilt, mit dem Gehäuse verbunden ist.

2. Element nach Anspruch 1, **dadurch gekennzeichnet, daß** das Funktionselement eine Absperrvorrichtung ist.

3. Element nach Anspruch 1, **dadurch gekennzeichnet, daß** das Funktionselement ein Rückschlagventil ist.

4. Element nach Anspruch 1, **dadurch gekennzeichnet, daß** das zwischen Faltenbalg (10) und Gehäuse eingeschlossene Volumen (11) mit einem Meßgerät zur Kontrolle seines Inhaltes verbindbar ist.

5. Element nach einem der vorhergehenden Ansprüche, **dadurch gekennzeichnet, daß** das Funktionselement ein in das fluide Medium eingreifendes Wirkteil aufweist, das über ein mechanisches Koppelelement betätigbar ist, welches eine Durchführung im Gehäuse durchfaßt, und die Durchführung eine oder mehrere Buchsen (9) aufweist, die dichtend am Koppelelement anliegen.

6. Element nach einem der vorhergehenden Ansprüche, **dadurch gekennzeichnet, daß** der Hohlraum (7) ein Vakuum, Druckgas oder ein Gas enthält.

7. Element nach Anspruch 4, **dadurch gekennzeichnet, daß** das zwischen Faltenbalg (10) und Gehäuse eingeschlossene Volumen (11) ein Vakuum, Druckgas oder ein Gas enthält.

8. Element nach einem der vorhergehenden Ansprüche, **dadurch gekennzeichnet, daß** die Nut (15) mit dem Hohlraum einer doppelwandigen Sicherheitsleitung über eine Öffnung in deren Flansch verbunden ist.

9. Element nach Anspruch 8, **dadurch gekennzeichnet, daß** die Bohrung (13) zwischen Flansch (1) und Hohlraum (7) durch eine Sperrvorrichtung verschließbar ist.

10. Element nach einem der vorhergehenden Ansprüche, **dadurch gekennzeichnet, daß** die Querschnittsfläche des Gehäuses dem äußeren Leitungsquerschnitt entspricht.

## Claims

1. Safety function element to influence or control fluid mediums in a double-walled line, whose walls are spaced at a distance to each other through a hollow space, the element being provided with a housing formed by walls (5), the housing being surrounded on all sides by a second wall (6) which is spaced at a distance to the first wall (5) through a hollow space (7) and the hollow space (7) being sealed so as to be gastight when in operation, and the function element has an active part, which engages with the fluid medium, which can be actuated via a mechanical coupler, which acts through a leadthrough in the housing,
**wherein**
- said housing has flanges (1) via which it can be connected to the line in a leakproof manner,
- said hollow space is provided with a connection (8) via which a measuring device can be connected to check its contents
- and the hollow space (7) is connected via one or more bores (13) to a groove (15) which is disposed in the sealing surface (14) of flange (1) or its seal (18), and during operation circumvents the line
- the active part is connected to the housing via a bellows (10), which devides the fluid medium from the leadthrough.

2. Element according to claim 1, **wherein** said function element is a shutoff device.

3. Element according to claim 1, **wherein** said function element is a non-return valve.

4. Element according to claim 1, **wherein** the volume (11) enclosed between bellows (10) and the housing is connectable to a measuring device to check its contents.

5. Element according to one of the preceding claims, **wherein** said function element has an active part which engages with the fluid medium, which can be actuated via a mechanical coupler, which acts through a leadthrough in the housing, and the leadthrough has one or more bushes (9) which rest against the coupler so as to effect a tight seal.

6. Element according to one of the preceding claims, **wherein** said hollow space (7) contains a vacuum, compressed gas or a gas.

7. Element according to claim 4, **wherein** volume (11), enclosed between bellows (10) and the housing contains a volume, compressed gas or a gas.

8. Element according to one of the preceding claims, **wherein** said groove (15) is connected to the hollow space of a double-walled safety line via an aperture in its flange.

9. Element according to claim 8, **wherein** said bore (13) between flange (1) and hollow space (7) can be closed through a shutoff device.

10. Element according to one of the preceding claims, **wherein** the cross-sectional area of the housing corresponds to the exterior line cross-section.

## Revendications

1. Organe de sécurité, destiné à influencer ou contrôler les fluides dans une conduite à double paroi, dont les deux parois sont séparées par un espace vide, cet organe étant situé dans un boîtier formé de parois (5) et entièrement entouré d'une deuxième paroi (6) située à une certaine distance de la première et séparée de cette dernière par un espace vide (7) hermétique aux gaz pendant le fonctionnement, et l'organe possède une partie active plongeant dans le fluide, actionnée par un organe mécanique de couplage traversant le boîtier,
**caractérisé en ce que**
- le boîtier est doté de brides (1) permettant de le relier de manière étanche à la conduite,
- l'espace vide est doté d'un raccord (8) permettant de brancher un appareil de mesure pour en contrôler le contenu,
- et l'espace vide (7) est relié à une rainure (15) ménagée dans le plan de joint (14) de la bride (1) ou dans son joint (18), par l'intermédiaire d'un ou de plusieurs orifices (13), la rainure forme un canal circulaire autour de la conduite pendant le fonctionnement
- la partie active étant reliée au boîtier par l'intermédiaire d'un soufflet (10) que empêche le fluide de pénétrer dans le passage.

2. Organe de sécurité selon la revendication 1, **caractérisé en ce que** l'organe est un dispositif de fermeture.

3. Organe de sécurité selon la revendication 1, **caractérisé en ce que** l'organe est un clapet anti-retour.

4. Organe de sécurité selon la revendication 1, **caractérisé en ce que** le volume (11) situé entre le soufflet (10) et le boîtier peut être relié à un appareil de mesure pour contrôler son contenu.

5. Organe de sécurité selon l'une des revendications précédentes, **caractérisé en ce que** l'organe de sécurité possède une partie active plongeant dans le fluide, actionnée par un organe mécanique de couplage traversant le boîtier, le passage étant doté d'une ou de plusieurs douilles (9) qui entourent hermétiquement l'élément de couplage.

6. Organe de sécurité selon l'une des revendications précédentes, **caractérisé en ce que** l'espace vide (7) renferme un vide, un gaz sous pression ou un gaz.

7. Organe de sécurité selon la revendication 4, **caractérisé en ce que** le volume (11) situé entre le soufflet (10) et le boîtier renferme un vide, un gaz sous pression ou un gaz.

8. Organe de sécurité selon l'une des revendications précédentes, **caractérisé en ce que** la rainure (15) est reliée à l'espace vide d'une conduite de sécurité à double paroi par l'intermédiaire d'un orifice ménagé dans la bride de cette dernière.

9. Organe de sécurité selon la revendication 8, **caractérisé en ce que** l'orifice (13) entre la bride (1) et l'espace vide (7) peut être obturé au moyen d'un dispositif de fermeture.

10. Organe de sécurité selon l'une des revendications précédentes, **caractérisé en ce que** la surface de la section du boîtier correspond à la section extérieure de la conduit.
